# EUROPEAN PATENT APPLICATION

(11) **EP 3 789 907 A1**
(43) Date of publication of application: **10.03.2021**
(21) Application number: 19195120.1
(22) Date of filing: 03.09.2019
(51) Int. Cl.: G06K 9/00

(54) **A SYSTEM, A METHOD FOR TRAINING A MACHINE LEARNING BASED PROCESSOR CIRCUITRY SUITABLE FOR CHARACTERIZING AN ENVI-RONMENT OF A VEHICLE**

(71) Applicant: Bayerische Motoren Werke Aktiengesellschaft, 80809 München (DE)
(72) Inventor: Notz, Dominik, Belmont 94002 (US); Kuehbeck, Thomas, Mountain View 94043 (US)

(57) **Abstract**

Embodiments of the present disclosure relate to a system (100) for characterizing an environment of a vehicle (110) and a method (200) for training a machine learning based processor circuitry (114) suitable for characterizing an environment of a vehicle (110). The method (200) comprises obtaining first object information from first monitoring data generated by monitoring at least one object (130, 140, 160) within the environment with at least one first environmental sensor circuitry (120) statically installed within the environment. The method (200) further provides for generating second monitoring data by monitoring the object (130, 140, 160) with at least one second environmental sensor circuitry (112) installed at the vehicle (110), wherein the second monitoring data is time-synchronized with the first monitoring data. Further, the method (200) comprises modifying one or more data processing parameters of the machine learning based processor circuitry (114) based on the first object information and the second monitoring data to cause a deviation between the first object information and second object information obtained from the second monitoring data by using the machine learning based processor circuitry (114) to decrease.

The system (100) comprises a processor circuitry (150) configured to obtain first object information from first monitoring data generated by monitoring at least one object (130, 140, 160) within the environment with at least one first environmental sensor circuitry (120) statically installed within the environment. The system (100) further comprises a second environmental sensor circuitry (112) installed at the vehicle (110) and configured to generate second monitoring data by monitoring the object (130, 140, 160). The second monitoring data is time-synchronized with the first monitoring data. Further, the system comprises a machine learning based processor circuitry (114). The machine learning based processor circuitry (114) is configured to modify one or more of its data processing parameters based on the first object information and the second monitoring data such that a deviation between the first object information and second object information obtained from the second monitoring data by using the machine learning based processor circuitry (114) decreases.

## Description

### Field

Embodiments of the present disclosure relate to a method and a system for training a machine learning based processor circuitry suitable for characterizing an environment of a vehicle.

### Background

In applications of environmental sensing circuitries for autonomously driving vehicles, trained machine learning based processor circuitries can be applied, for example, for detecting an object (e.g. other road users, obstacles, road boundaries, lane markings, etc.), for semantic segmentation (e.g. determining drivable space and non-drivable space) and/or for velocity estimation of other objects.

The machine learning based processor circuitries can, for example, be trained with labelled monitoring data as training data. The labelled monitoring data can be obtained by tagging monitoring data provided by an environmental sensor circuitry with (high-level) object information, so-called "labels" which, for example, can be 2D or 3D bounding boxes or polygons indicating a contour and/or a position of a vehicle, an obstacle or lane markings.

Since the environmental sensor circuitry typically is mounted on the autonomously driving vehicle a view of surrounding objects can be obstructed. Consequently, the monitoring data provided by the environmental sensors may be inchoate.

Since established automated methods are not suitable for generating the labelled monitoring data based on the inchoate monitoring data, conventional concepts for generating those labelled monitoring data provide for "manually" or in some cases "semi-automatically" creating the labels and combine them with the monitoring data. For example, the monitoring data recorded during test drives needs to be manually labelled. To this end, the monitoring data can be shared with external entities generating the labelled monitoring data manually.

Thus, generating the labelled monitoring data for training the machine learning based processor circuitry can be costly in terms of time and money.

Hence, there is a demand for an improved concept for generating labelled monitoring data for training machine learning based processor circuitries suitable for characterizing an environment.

This demand can be satisfied by the subject matter of the appended claims.

### Summary

A basic idea of a concept described in the present disclosure is to automatically generate labelled monitoring data for autonomous driving use cases.

To this end, a (high-fidelity) environmental sensor circuitry can be installed statically at the infrastructure to have an unobstructed view of an environment (e.g. a traffic space) of an autonomously driving vehicle. Due to their mounting position the environmental sensor circuitry can generate extensive monitoring data suitable for generating labelled monitoring data. The labelled monitoring data can be generated from the extensive monitoring data, for example, using automated methods based on artificial intelligence (AI).

Those labelled monitoring data can be utilized for training a machine learning based processor circuitry to characterize the environment of the (autonomously driving) vehicle based on inchoate monitoring data provided by an environmental sensor circuitry installed at the (autonomously driving) vehicle.

According to a first aspect, embodiments of the present disclosure refer to a method for training a machine learning based processor circuitry suitable for characterizing an environment of a vehicle. The method comprises obtaining first object information from first monitoring data generated by monitoring at least one object within the environment with a first environmental sensor circuitry statically installed within the environment. The method further provides for generating second monitoring data by monitoring the object with at least one second environmental sensor circuitry installed at the vehicle, wherein the second monitoring data is time-synchronized with the first monitoring data. Further, the method comprises modifying
one or more data processing parameters of the machine learning based processor circuitry based on the first object information and the second monitoring data to cause a deviation between the first object information and second object information obtained from the second monitoring data by using the machine learning based processor circuitry to decrease.

The machine learning based processor, for example, can be a programmable hardware using artificial intelligence to learn and improve performing one or more specific tasks on the basis of labelled monitoring data comprising the first object information and the first monitoring data (e.g. for supervised learning, as laid out in more detail later).

In embodiments of the method the machine learning based processor circuitry can serve to characterize the environment of the vehicle or the object herein. The object can be another vehicle (non-ego vehicle), an obstruction or a lane marking.

A characterization can be influenced by the data processing parameters. For example, in case of the machine learning based processor circuitry utilizing an artificial neural network for characterizing the object, the data processing parameters may influence calculation steps done within nodes of the artificial neural network. In training the machine learning based processor circuitry, the data processing parameters can be modified to improve the characterization of the of the object.

The first environmental sensor circuitry, for example, comprises an environmental sensor such as a camera, a radar and/or a LIDAR, which can be installed at the infrastructure (e.g. traffic lights, buildings, overpasses, etc.), to generate the first monitoring data. The first environmental sensor circuitry can be installed such that they have an "unobstructed" view of the vehicle's environment in order to provide extensive first monitoring data.

The first object information, for example, comprises high-level information abstracted from the first monitoring data. To this end, for example a processor circuitry can be used. The processor circuitry can be configured to use AI to derive high-level information from coherences between fractions of the first monitoring data. The high-level information, for example, is a contour of the object determined from spatially clustered measurement samples of the first monitoring data which in this example are indicative of spatial coordinates of the object. For example, the first monitoring data and the second monitoring data further can be indicative of distances to a surface of the object.

In order to generate the second monitoring data, the second environmental sensor circuitry may comprise another camera, radar and/or LIDAR. For a comparability between the second monitoring data and the first object information, the first monitoring data and the second monitoring data are time-synchronized. To this end, the first and the second environmental sensor circuitry may be configured such that they record the first and the second monitoring data simultaneously.

The machine learning based processor circuitry can be configured to generate second object information through abstracting high-level information from the second monitoring data on the basis of the data processing parameters using the machine learning based processor circuitry. The data processing parameters, for example, are deposited on the machine learning based processor circuitry or an external data storage medium.

In order to modify the data processing parameters, the machine learning based processor circuitry can determine the deviation between the first and the second object information and adjust the data processing parameters depending on the deviation. To this end, established learning algorithms, such as supervised learning can be utilized. In case of the first and the second object information being indicative of 2D or 3D polygons, for example, a spatial difference between the polygons may be a measure of the deviation.

In some embodiments of the method, the first object information indicates at least one first object type of a plurality of object types, and the second object information indicates at least one second object type of a plurality of object types, wherein the method further comprises modifying at least one of the data processing parameters to cause the first and the second object type to correspond.

The first and the second object type can represent a class (e.g. obstacle, vehicle, car, truck, bus, motorcycle, cyclist, pedestrian) and, for example, is obtained from dimensions or a geometry of clustered measurement samples of the first and the second monitoring data, respectively. For this, cluster analysis on the basis of artificial intelligence can be used which in case of determining the second object type using the machine learning based processor circuitry may be influenced by the data processing parameters.

The first and the second object type, for example, indicates whether the object is a non-ego vehicle (e.g. a truck, a bus, a motorcycle, a car or a bicycle), an obstacle (e.g. an infrastructure element, a barrier or road boundaries) or part of lane markings.

To cause correspondence between the first and the second object type, the machine learning based processor circuitry can vary the data processing parameters using, for example, one of the aforementioned learning algorithms.

In some embodiments of the method, the first object information refers to a first reference coordinate system of the first environmental sensor circuitry and the second monitoring data refers to a second reference coordinate system of the second environmental sensor circuitry. The method may further provide for transforming the first object information and the second monitoring data into a common reference coordinate system.

The first and the second environmental sensor circuitry may record the first and the second monitoring data with reference to their geographical position. As the first and the second environmental sensor circuitry can have different geographical positions, the first and the second object information may refer to different reference coordinate systems.

For comparability the first and the second object information can be transformed into the common reference coordinate system depending on a relative position of the first and the second environmental sensor circuitry to each other. The relative position can be determined, for example, using dGPS.

In some embodiments of the method, the common reference coordinate system corresponds to the second reference coordinate system.

Thus, for example, the first object information can be transformed into the second reference coordinate system used as common coordinate system. In case of using the second reference coordinate system as the common reference coordinate system the data processing parameters may refer to the geographical position of the vehicle. This may lead to the machine learning based processor circuitry being suitable for characterizing the object based on the second monitoring data and the data processing parameters without performing any further coordinate transformation on the data processing parameters.

This may reduce a computing effort in characterizing the environment of the vehicle.

In some embodiments of the method, the first object information indicates at least a first object contour and the method further comprises modifying at least one of the data processing parameters to cause a deviation between a first object contour and a second object contour, obtained from the second monitoring data by using the machine learning based processor circuitry, to decrease.

The first and the second monitoring data, for example, each comprise spatially clustered measurement samples indicative of the object. Those can be used for determining the first and the second object contour, for example, using AI. For example, the machine learning based processor circuitry can be configured to determine an envelope of spatially clustered measurement samples of the second monitoring data using AI. The envelope may correspond to a 2D or a 3D polygon or bounding box representing the second object contour.

The deviation between the first and the second object contour, for example, can be represented by an area or a space which are not enclosed in both the first and the second object contour.

Training the machine learning based processor circuitry, thus, for example, provides for modifying the data processing parameters using one of the aforementioned learning algorithms such the deviation between the first and the second object contour is reduced.

In some embodiments the first object information indicates at least a first object position and the method further comprises modifying at least one of the data processing parameters to cause a deviation between a first object position and a second object position, obtained from the second monitoring data by using the machine learning based processor circuitry, to decrease.

The first and the second object position each may indicate a relative position of the object, for example, with reference to the geographical position of the first and the second environmental sensor circuitry, respectively.

The first and the second object position, for example, each are represented by coordinates of a reference point determined from the first and the second monitoring data.

For example, the reference point indicating the first or the second object position may correspond to a measurement sample or a mean value of multiple measurement samples of the first and the second monitoring data referring to the same object.

According to a second aspect examples relate to a system for characterizing an environment of a vehicle. The system comprises a processor circuitry configured to obtain first object information from first monitoring data generated by monitoring at least one object within the environment with at least one first environmental sensor circuitry statically installed within the environment. The system further comprises a second environmental sensor circuitry installed at the vehicle and configured to generate second monitoring data by monitoring the object. The second monitoring data is time-synchronized with the first monitoring data. Further, the system comprises a machine learning based processor circuitry. The machine learning based processor circuitry is configured to modify one or more of its data processing parameters based on the first object information and the second monitoring data such that a deviation between the first object information and second object information obtained from the second monitoring data by using the machine learning based processor circuitry decreases.

The aforementioned system can be utilized for autonomous driving purposes. For this, the processor circuitry and the machine learning based processor circuitry may be implemented in different or same entities. For example, the processor circuitry and the machine learning based processor circuitry can be installed at or outside the vehicle. Alternatively, they can be comprised by different entities.

The processor circuitry, for example, is a programmable hardware device (e.g. a central processing unit or a graphical processing unit) which is configured to obtain the first object information as described in connection with the aforementioned method. Moreover, the processor circuitry can be coupled to the machine learning based processor circuitry to provide the first object information and the first monitoring data to the machine learning based processor circuitry.

In some embodiments of the system, the first environmental sensor circuitry comprises a first and a second environmental sensor. The first environmental sensor circuitry can further be configured to obtain the second monitoring data by combining a first set of first monitoring data, generated by monitoring the object with the first environmental sensor, and a second set of first monitoring data, generated by monitoring the object with a second environmental sensor.

The first and the second environmental sensor, for example, are cameras, LIDAR and/or radar systems. They may have different views of the environment which allows monitoring the object in stereoscopic manner. The skilled person having benefit from the present disclosure will appreciate that this may allow generating first monitoring data with improved depth perception and/ or improved spatial resolution. Consequently, in training the machine learning based processor circuitry using the above mentioned concept this may lead to an increased accuracy of the data processing parameters.

### Brief description of the Figures

Some embodiments of systems and/or methods will be described in the following by way of example only, and with reference to the accompanying figures, in which
- Fig. 1: illustrates a system for training a machine learning based processor circuitry; and
- Fig. 2: schematically illustrates a method for training a machine learning based processor circuitry.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

Due to an installation position of environmental sensors of autonomously driving vehicles they may have an obstructed view of their environment. Hence, monitoring data generated by the environmental sensor may be impractical for generating the labelled training data which may be suitable for training a machine learning based processor circuitry for purposes of autonomous driving.

A basic idea of the present disclosure is to provide a concept for automatically generating labelled training using an environmental sensor having an unobstructed view of the environment.

In the following, a concept for training a machine learning based processor circuitry with automatically generated labelled training data will be explained by some examples.

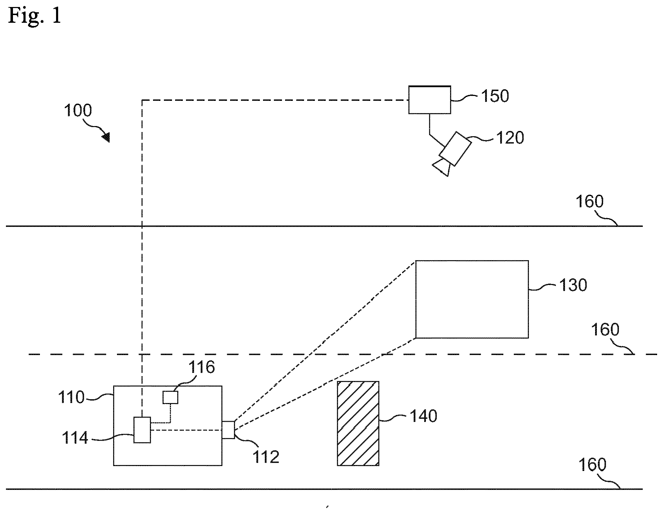

Fig. 1 exemplarily illustrates a traffic situation with a vehicle 110 and multiple objects within its environment which, for example, are a non-ego vehicle 130, lane markings 160 and an obstacle 140. The traffic situation is characterized by a system 100 comprising a processor circuitry 150 configured to obtain first object information from first monitoring data generated by a first environmental sensor circuitry 120, a second environmental sensor circuitry 112 configured to generate second monitoring data and a machine learning based processor circuitry 114. The machine learning based processor circuitry is connected to the processing circuitry 150 and the second environmental sensor circuitry 112 to obtain the first and the second monitoring data. The second environmental sensor circuitry 112 is installed at the vehicle 110.

In the present example, the first environmental sensor circuitry 120 is statically installed at an infrastructure object within the environment. Hence, no localization and no ego motion need to be estimated and these source of inaccuracy can be avoided.

The non-ego-vehicle, for example, is a truck, a bus, a car or a motorcycle and the obstacle 140 can be a road construction barrier or a broken-down vehicle. For simplicity the traffic situation is illustrated in two dimensions. The concept described in connection with this example however, can be applied analogously for a three-dimensional characterization of the environment.

The first monitoring data and the second monitoring can be indicative of the non-ego vehicle 130, the obstacle 140 and/or the lane markings 160. Measurement samples of the first and the second monitoring data, for example, are indicative of spatial coordinates of surfaces of the objects 130, 140 and 160. The first and the second environmental sensor circuitry 112 and 120 are coupled to the processor circuitry 150 and the machine learning based processor circuitry 114, respectively, to transmit the first and the second monitoring data.

The processor circuitry 150 can determine the first object information from the first monitoring data. The machine learning bases processor circuitry 114 can determine the second object information based on the data processing parameters, for example, using AI, as above described. For example, the processing parameters may influence calculations steps within nodes of an artificial neural network implemented on the machine learning processor circuitry 114.

In some further embodiments, the machine learning bases processor circuitry 114 is configured to serve as the processor circuitry 150.

Since the second environmental sensor's view of the traffic scene may be obstructed, for example, by the obstacle 140, the second monitoring data may be inchoate. As can be seen in Fig. 1, the obstacle 140, for example, obscures a portion of the non-ego vehicle 130. This may lead to the second object information being less accurate or less reliable than the first object information.

Due to different views of the traffic situation, the first object information and the second monitoring data may refer to a first and a second reference coordinate system, respectively, whose coordinate origin corresponds to a spatial position of the first and the second environmental sensor circuitry, respectively.

For comparability, the first object information and the second monitoring data can be transformed into a common reference coordinate system which for example, is the first, the second or an arbitrary reference coordinate system through coordinate transformation. In some embodiments, the common reference coordinate system corresponds to the second reference system for reasons already mentioned above. The coordinate transformation can be executed whether by the machine learning based processor circuitry 114 or the processor circuitry 150 on the basis of a relative position of the first and the second environmental sensor circuitry 120 and 112 to each other. The relative position, for example, is determined from positional data generated by a communication of a reference station (not shown) with a dGPS antenna 116 installed at the vehicle 110. For this, the dGPS antenna 116 is coupled with the machine learning based processor circuitry 114.

The idea of training the machine learning based processor circuitry 114 is to compare the first and the second object information in order to determine a deviation between the first and the second object information and to modify the data processing parameters such that the deviation decreases. For this, the machine learning based processor circuitry 114 can obtain the first object information and the first monitoring data and the second object information and the second monitoring data. An advantage of the concept described herein may be that the first object information can be generated instantaneous with monitoring the traffic situation without human labor or high costs.

As already mentioned, depending on a use case the first and the second object information can be of different nature. Consequently, the deviation may be of a different nature as well. The skilled person having benefit from the present disclosure will appreciate that, the deviation, for example, is indicative of an area, a space, a distance and or a difference regarding an object type, as the first and the second object information can be indicative of a contour, of a position, of dimensions or of an object type of the objects 130, 140 and 160.

Learning algorithms, such as supervised learning, can be utilized to modify the data processing parameters using the first object information and the first monitoring data as ground truth to compare them with the second object information and the second monitoring data.

In supervised learning the machine learning based processor circuitry 114 can use pairs of the first object information and the first monitoring data as example input-output pairs (labelled monitoring data) to compare them with pairs of the second object information and the second monitoring data in order to modify the data processing parameters such that the deviation between the first and the second object information decreases. Those pairs, for example, are vectors comprising the first object information and the first monitoring data or the second object information and the second monitoring data, respectively.

The machine learning based processor circuitry 114 trained according to the aforementioned concept, thus, may be suitable to determine positions, contours, dimensions and/or object types of the objects 130, 140 and 160 based on the modified data processing parameters with a sufficient accuracy/reliability for autonomous driving purposes. For example, with the modified data processing parameters the machine learning based processor circuitry 114 may determine a contour, a position and a contour of the non-ego vehicle 130 from the second monitoring data with sufficient accuracy/reliability for purposes of autonomous driving.

Determining the object type of the objects 130, 140 and 160 can be required for predefining a route of the (autonomously driving) vehicle 110, for example, to prevent the vehicle 110 from colliding with the obstacle 140 and/or the non-ego vehicle 130.

Moreover determining the object type can be useful for systems intended to perform image segmentation (semantic segmentation) in order to distinguish between drivable space passable by the vehicle 110 and non-drivable space impassable by the vehicle 110. Using semantic segmentation, for example, space between the lane markings 160 can be considered as drivable space.

Further, the concept described herein may be used for estimating a velocity of objects within the vehicle's environment, for example, in tracking a position of the non-ego vehicle 130 using the described concept.

Since the first environmental sensor circuitry 120 can be used to generate the first object information for a plurality of vehicles, such as the vehicle 110, costs of the first environmental sensor circuitry 120 are less important than costs of the second environmental sensor circuitry 112, for example, installed at each of the plurality of the vehicles.

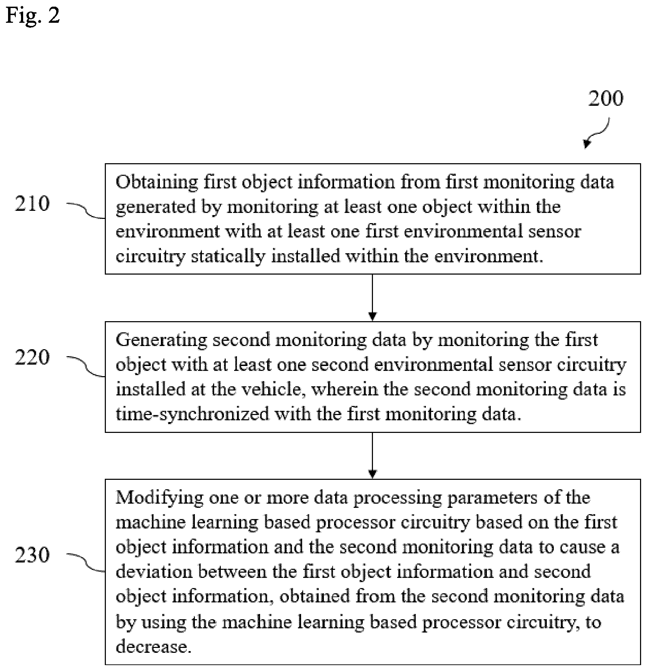

Fig. 2 illustrates a method 200 which, for example, can be executed by the system 100 described above.

The method 200 comprises obtaining 210 the first object information from the first monitoring data, for example, using AI implemented on the processor circuitry 150 or the machine learning based processor circuitry 114, as mentioned in connection with Fig. 1. The first monitoring data, for example, is generated by the first environmental sensor circuitry 120 installed at an infrastructure object within the environment of the vehicle 110.

Further, the method 200 comprises generating 220 the second monitoring data, for example, using the second environmental sensor circuitry 112 installed at the vehicle. As above mentioned the first monitoring data and the second monitoring data are time-synchronized, for example, due to the fact that the first and the second environmental sensor circuitry 120 and 112 record the environment (traffic scene) simultaneously.

The method 200 further comprises modifying 230 the one or more data processing parameters of the machine learning based processor circuitry 114, for example, using one of the aforementioned learning algorithms in order to decrease the deviation between the first and the second object information.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A method (200) for training a machine learning based processor circuitry (114) suitable for characterizing an environment of a vehicle (110), comprising:
obtaining (210) first object information from first monitoring data generated by monitoring at least one object (130, 140, 160) within the environment with at least one first environmental sensor circuitry (120) statically installed within the environment;
generating (220) second monitoring data by monitoring the object (130, 140, 160) with at least one second environmental sensor circuitry (112) installed at the vehicle (110), wherein the second monitoring data is time-synchronized with the first monitoring data; and
modifying (230) one or more data processing parameters of the machine learning based processor circuitry (114) based on the first object information and the second monitoring data to cause a deviation between the first object information and second object information, obtained from the second monitoring data by using the machine learning based processor circuitry (114), to decrease.

2. The method (200) of claim 1, wherein the first object information indicates at least one first object type of a plurality of object types, and the second object information indicates at least one second object type of a plurality of object types, wherein the method further comprises modifying at least one of the data processing parameters to cause the first and the second object type to correspond.

3. The method (200) of any one of the preceding claims,
wherein the first object information refers to a first reference coordinate system of the first environmental sensor circuitry (120),
wherein the second monitoring data refers to a second reference coordinate system of the second environmental sensor circuitry (112), and
wherein the method (200) further comprises transforming the first object information and the second monitoring data into a common reference coordinate system.

4. The method (200) of claim 3, wherein the common reference coordinate system corresponds to the second reference coordinate system.

5. The method (200) of any one of the preceding claims, wherein the first object information indicates at least a first object contour, wherein the method further comprises modifying (230) at least one of the data processing parameters to cause the deviation between the first object contour and a second object contour, obtained from the second monitoring data by using the machine learning based processor circuitry (114), to decrease.

6. The method (200) of any one of the preceding claims, wherein the first object information indicates at least a first object position, and wherein the method (200) further comprises modifying (230) at least one of the data processing parameters to cause a deviation between the first object position and a second object position, obtained from the second monitoring data by using the machine learning based processor circuitry (114), to decrease.

7. A system (100) for characterizing an environment of a vehicle (110), comprising:
processor circuitry (150) configured to obtain first object information from first monitoring data generated by monitoring at least one object (130, 140, 160) within the environment with a first environmental sensor circuitry (120) statically installed within the environment;
second environmental sensor circuitry (112) installed at the vehicle (110) and configured to generate second monitoring data by monitoring the object (130, 140, 160), wherein the second monitoring data is time-synchronized with the first monitoring data;
a machine learning based processor circuitry (114) configured to modify one or more of its data processing parameters based on the first object information and the second monitoring data such that a deviation between the first object information and second object information obtained from the second monitoring data by using the machine learning based processor circuitry 114 decreases.

8. The system (100) of claim 7, wherein the first environmental sensor circuitry 120 comprises a first and a second environmental sensor, and wherein the first environmental sensor circuitry is further configured to obtain the first monitoring data by combining a first set of first monitoring data, generated by monitoring the object (130, 140, 160) with the first environmental sensor, and a second set of first monitoring data, generated by monitoring the object (130, 140, 160) with a second environmental sensor.
